(19)

Europäisches
Patentamt
European
Patent Office
Office européen
des brevets

(11) **EP 3 875 553 A1**

(12) **EUROPEAN PATENT APPLICATION**

(43) Date of publication:
**08.09.2021 Bulletin 2021/36**

(51) Int Cl.:
***C09D 11/03*** (2014.01)    ***C09D 11/10*** (2014.01)

(21) Application number: **20160752.0**

(22) Date of filing: **03.03.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Hubergroup Deutschland GmbH
85551 Kirchheim-Heimstetten (DE)**

(72) Inventors:
• **GARBER, André
 85454 Finsing (DE)**
• **SCHORER, Joachim
 81673 München (DE)**

(74) Representative: **Henkel & Partner mbB
Patentanwaltskanzlei, Rechtsanwaltskanzlei
Maximiliansplatz 21
80333 München (DE)**

(54) **HARD RESIN SOLUTION AND WATER-BASED OVERPRINT VARNISH INCLUDING AN AMINE COMPOUND COMPRISING HYDROXYL GROUPS**

(57) The present invention relates to an aqueous hard resin solution for the use in a water-based overprint varnish, wherein the aqueous hard resin solution contains water, at least one hard resin and at least one amine compound, wherein at least one of the at least one amine compound has at least two hydroxyl groups and at least one Cn-including group, with n being an integer of 3 or more.

EP 3 875 553 A1

**Description**

The present invention relates to an aqueous hard resin solution for the use in a water-based overprint varnish and to a water-based overprint varnish including such an aqueous hard resin solution.

Overprint varnishes are usually clear and transparent hard coatings or films, respectively, which are applied to a substrate in order to protect the substrate against mechanical influences, to provide to the substrate a smooth as well as glossy surface and/or a further special effect, such as matt or soft-touch appearance and the like. Typically, a varnish does not contain pigment at all or only in a small amount and does not have any colour at all or only little colour. The substrate may be for instance a printed sheet or web, which can be used e.g. for packaging applications, such as for food packaging, e.g. a printed cereal box, cracker box, tissue box, pet food bag or the like.

A plurality of respective overprint varnishes are known, wherein the overprint varnishes are typically classified into oil-based overprint varnishes, water-based overprint varnishes, radiation curing overprint varnishes, solventborne overprint varnishes, and others.

Oil-based overprint varnishes usually contain as binder a resin, such as an alkyd resin or rosin derivative. Furthermore, oil-based overprint varnishes typically further include wax in order to provide to the substrate a high scuff resistance, solvent, like vegetable oil, mineral oil or fatty acid esters, as well as dryers in order to facilitate and accelerate the setting or drying of the varnish. Typically, oil-based overprint varnishes have a high viscosity of 4,000 cps or even more and are typically applied through an ink unit in an offset lithographic press. However, the mechanism of oxidative drying is comparatively slow and can take several hours or even days. Moreover, these kinds of varnishes often contain as dryer metal salt complexes, most of which are classified as toxic or carcinogen. Another drawback of these varnishes is their tendency to yellowing.

Solventborne overprint varnishes are used in a small market. Their most common resin is nitrocellulose, although cellulose acetate propionate (CAP), vinyl chloride copolymers, polyamides, alkyds and acrylics are also used in these coating systems. The main solvents in solventborne overprint varnishes are esters, alcohols, ketones and aromatic hydrocarbons. Plasticizers and other additives are used to provide flexibility.

Water-based overprint varnishes usually contain water, as binder a so-called hard polymer, such as a styrene polymer or an acrylic polymer, and an emulsion or dispersion of a so-called soft polymer, such as a styrene acrylate copolymer. In order to improve the solubility of the hard polymer in water, the water-based overprint varnishes further include a neutralizing agent, such as mostly ammonia. Typically, first a hard resin solution is made by mixing water, the hard resin and the neutralizing agent, before the so prepared resin solution is mixed with the emulsion or dispersion of the soft polymer and one or more additives. The water-based overprint varnishes typically are used to improve the properties of products, which have been printed with relatively low-grade and low cost inks. Thus, for products, for which very high quality printing is not necessary, such as for instance for cereal boxes, cracker boxes, tissue boxed, pet food bags and the like, water-based overprint varnishes offer an economical means of improving the appearance and other properties of substrates printed with low cost inks. Such water-based overprint varnishes are also used to improve the appearance and tactile qualities of higher grade products, such as for example lithographic magazine covers or the like. These water-based overprint varnishes are usually not harmful. Moreover, they are easy to handle as well as to apply and they dry basically physically upon evaporation of water. In addition the water-based overprint varnishes can dry by a self-crosslinking or crosslinking process. However, usually the gloss of water-based overprint varnishes is in need of improvement, in particular if the water-based overprint varnish contains ammonia as neutralizing agent. Usually, water-based high gloss overprint varnishes including ammonia have a gloss level of less than 70 at a viewing angle of 60°. Water-based overprint varnish including other neutralizing agents instead of ammonia, such as triethanolamine, are known to have a better gloss; however, they have an insufficient blocking resistance, i.e. they have the tendency to adhere at other surfaces, in particular if pressure is applied. In the worst case, the surfaces cannot be separated so that printed substrates cannot be processed any further e.g. into folding boxes, but need to be disposed of. Therefore, an excellent blocking resistance is an important property for an overprint varnish in a plurality of applications, such as for instance and in particular for packaging applications, such as as coating of a printed food packaging.

Another class of overprint varnishes are radiation curing varnishes, which offer a - compared to water-based overprint varnishes - higher gloss-level and superior mechanical and chemical resistance. It is thought that this is due to the chemical reaction, mostly a free-radical polymerization, which is performed during the curing under UV light, which increases the network density. Typically, these radiation curing varnishes comprise vinyl-functional monomers, oligomers and polymers, as well as photoinitiators, which initiate the polymerization reaction upon radiation with actinic light. All these compounds and especially many photoinitiators have drawbacks in terms of labelling, safety and suitability for food-packaging. In addition, radiation curing varnishes require special lamps in order to initiate polymerization, like Hg-lamps, Fe-doped lamps or UV-LED lights. UV curing overprint varnishes reach a gloss level of more than 85 at a viewing angle of 60°, but they are also much more expensive compared to water-based overprint varnishes.

In view of this, the object underlying the present invention is to provide an aqueous hard resin solution for the use in a water-based overprint varnish and a water-based overprint varnish including such an aqueous hard resin solution being perfectly well suited as food packaging, being easy to handle, having no safety risk and being cheaper than a radiation curing composition, which provides an excellently high gloss level, but which nevertheless has a high blocking resistance, i.e. a high resistance against adhesion at other surfaces, in particular if pressure is applied.

In accordance with the present invention, this object is satisfied by providing an aqueous hard resin solution for the use in a water-based overprint varnish, wherein the aqueous hard resin solution contains water, at least one hard resin and at least one amine compound, wherein at least one of the at least one amine compound has at least two hydroxyl groups and at least one Cn-including group, with n being an integer of 3 or more.

This solution bases on the surprising finding that by using an amine having at least two hydroxyl groups and at least one $C_n$-including group, with n being an integer of 3 or more, as neutralizing agent in an aqueous hard resin solution and in a water-based overprint varnish including the aqueous hard resin solution, the obtained water-based overprint varnish has not only an excellent gloss (typically a gloss level of more than 70 at a viewing angle of 60°), but in particular also a high blocking resistance, i.e. a high resistance against adhesion at other surfaces, in particular if pressure is applied. Furthermore, the aqueous hard resin solution and water-based overprint varnish of the present invention have a sufficiently low migration potential, i.e. they do not migrate to a significant extent through a substrate, such as a cardboard of a food packaging. Moreover, likewise to known aqueous hard resin solutions and water-based overprint varnishes, the aqueous hard resin solution and water-based overprint varnish of the present invention are easy to handle, have no safety risk and are comparable cheap, since they only contain non-toxic and comparable cheap components. In addition, the aqueous hard resin solution and water-based overprint varnish of the present invention have a good abrasion resistance and their slip is adjustable. On account of these reasons, the aqueous hard resin solution and water-based overprint varnish of the present invention are suitable for a plurality of applications, such as, but not limited as coating of a printed packaging and particularly a printed food packaging.

A hard resin is defined in accordance with the present invention as a polymer being at ordinary temperatures solid and brittle, easily pulverizeable and watersoluble with heat and/or upon addition of alkaline compounds. Typically, a hard resin contains carboxyl group(s).

The aqueous hard resin solution and water-based overprint varnish of the present invention are in particular suitable to be printed with gravure printing and flexographic printing units.

In accordance with the present invention, the aqueous hard resin solution comprises at least one amine compound having at least two hydroxyl groups and at least one Cn-including group, with n being an integer of 3 or more. This means that the nitrogen atom of the amine compound is coupled with one group (in case of a primary amine), with two groups (in case of a secondary amine) or with three groups (in case of a tertiary amine), wherein in case of a primary amine the one group and in the case of a secondary or tertiary amine all groups in total contain two or more hydroxyl groups. In case of a secondary or tertiary amine, the two or more hydroxyl groups may be substituents of one of the groups or two or all of the groups may each comprise one or more hydroxyl groups. However, at least one of these groups is a $C_n$-including group, with n being an integer of 3 or more, i.e. for instance a $C_3$-alkyl group, a $C_6$-alkyl group, a $C_6$-aryl group or a $C_6$-cycloalkyl group.

In a further development of the idea of the present invention, it is proposed that the amine compound of the aqueous hard resin solution has the general formula (I):

$$NR^1R^2R^3 \qquad (I),$$

wherein

$R^1$ and $R^2$ are independently from each other H, a linear or branched alkyl group, a cycloalkyl group, an alkyl ether group, a hydroxyl alkyl ether group, an alkyl thioether group, an amide group, an amino-functional alkyl group (i.e. an alkyl group being substituted with one or more primary, secondary and/or tertiary amino groups), an amino-functional alkylether group (i.e. an alkylether group being substituted with one or more primary, secondary and/or tertiary amino groups), an aryl group or a linear or branched hydroxyl alkyl group and

$R^3$ is a linear or branched alkyl group, a cycloalkyl group, an alkyl ether group, an alkyl thioether group, an amide group, an aryl group or a linear or branched hydroxyl alkyl group,

with the provision that the residues $R^1$, $R^2$ and $R^3$ comprise in total two or more hydroxyl groups and that at least one of residues $R^1$, $R^2$ and $R^3$ is a Cn-including group, with n being an integer of 3 or more.

Preferably, the alkyl group is a $C_{1-20}$-alkyl group and more preferably a $C_{1-10}$-alkyl group, whereas the cycloalkyl group is preferably a $C_{6-24}$-cycloalkyl group and more preferably a $C_{6-12}$-cycloalkyl group, the (hydroxyl) alkyl ether group is preferably a (hydroxyl) $C_{1-20}$-alkyl ether group and more preferably a (hydroxyl) $C_{1-10}$-alkyl ether group, the amino-functional alkyl group is a $C_{1-20}$-functional alkyl group, the amino-functional alkylether group is a $C_{1-20}$-amino-functional alkylether group, the aryl group is preferably a $C_{6-24}$-aryl group and more preferably a $C_{6-12}$-aryl group and the linear or branched hydroxyl alkyl group is preferably a linear or branched $C_{1-20}$-hydroxyl alkyl group and more preferably a linear or branched $C_{1-10}$-hydroxyl alkyl group.

Good results are in particular obtained, when the aqueous hard resin solution contains an amine compound having the general formula (I), in which:

$R^1$ and $R^2$ are independently from each other H, a linear or branched $C_{1-10}$-alkyl group, a $C_{6-12}$-cycloalkyl group, a $C_{1-10}$-alkyl ether group, a linear or branched $C_{1-10}$-hydroxyl alkyl ether group, a $C_{6-12}$-aryl group or a linear or branched $C_{1-10}$-hydroxyl alkyl group, and
$R^3$ is a linear or branched $C_{1-10}$-alkyl group, a $C_{6-12}$-cycloalkyl group, a $C_{1-10}$-alkyl ether group, a $C_{6-12}$-aryl group or a linear or branched $C_{3-10}$-hydroxyl alkyl group (which may contain one, two or more hydroxyl groups).

Particular good results are obtained, when the aqueous hard resin solution contains an amine compound having the general formula (I), in which:

$R^1$ and $R^2$ are independently from each other H, a linear or branched $C_{1-10}$-alkyl group, a linear or branched $C_{1-10}$-hydroxyl alkyl ether group, a $C_{6-12}$-aryl group or a linear or branched $C_{1-10}$-hydroxyl alkyl group and
$R^3$ is a linear or branched $C_{1-10}$-alkyl group, a $C_{6-12}$-cycloalkyl group, a $C_{1-10}$-alkyl ether group, a $C_{6-12}$-aryl group or a linear or branched $C_{3-10}$-hydroxyl alkyl group (which may contain one, two or more hydroxyl groups).

In accordance with a further preferred embodiment of the present invention, the aqueous hard resin solution contains an amine compound having the general formula (I), in which:

$R^1$ and $R^2$ are independently from each other H or a linear or branched $C_{1-10}$-alkyl group and
$R^3$ is a linear or branched $C_{3-20}$-hydroxyl alkyl group (which may contain one, two or more hydroxyl groups.

Preferably, the linear or branched $C_{1-10}$-alkyl group is a linear $C_{1-6}$-alkyl group, such as a methyl group, an ethyl group, a propyl group or a butyl group.

Accordingly, it is further preferred that the aqueous hard resin solution contains an amine compound having the general formula (I), in which:

$R^1$ and $R^2$ are independently from each other H or a linear or branched $C_{1-6}$-alkyl group and
$R^3$ is a linear or branched $C_{3-10}$-hydroxyl alkyl group.

In accordance with a first particularly preferred embodiment of the present invention, the aqueous hard resin solution contains a secondary amine compound with the general formula (I), i.e. an amine compound in which:

$R^1$ is H,
$R^2$ and $R^3$ are independently from each other a linear or branched alkyl group, a cycloalkyl group, an alkyl ether group, a hydroxyl alkyl ether group, an alkyl thioether group, an amide group, an alkyl thioether group, an aminoalkyl group, an aminoalkylether group, an aryl group or a linear or branched hydroxyl alkyl group, with the provision that the residues $R^1$, $R^2$ and $R^3$ comprise in total two or more hydroxyl groups and that at least one of residues $R^1$, $R^2$ and $R^3$ is a Cn-including group, with n being an integer of 3 or more.

Particular good results are obtained in this embodiment, when the aqueous hard resin solution contains an amine compound having the general formula (I), in which:

$R^1$ is H,
$R^2$ is a linear or branched $C_{1-6}$-alkyl group and
$R^3$ is a linear or branched $C_{3-10}$-hydroxyl alkyl group.

Even more preferably, $R^2$ is a linear $C_{1-4}$-alkyl group, i.e. a methyl group, an ethyl group, a propyl group or a butyl group, still more preferably a methyl group or an ethyl group and most preferably a methyl group.

In accordance with a second particularly preferred embodiment of the present invention, the aqueous hard resin solution contains a tertiary amine compound with the general formula (I), i.e. an amine compound in which: $R^1$, $R^2$ and $R^3$ are independently from each other a linear or branched alkyl group, a cycloalkyl group, an alkyl ether group, a hydroxyl alkyl ether group, an alkyl thioether group, an amide group, an alkyl thioether group, an aminoalkyl group, an aminoalkylether group, an aryl group or a linear or branched hydroxyl alkyl group, with the provision that the residues $R^1$, $R^2$ and $R^3$ comprise in total two or more hydroxyl groups and that at least one of residues $R^1$, $R^2$ and $R^3$ is a $C_n$-including group, with n being an integer of 3 or more.

Particular good results are obtained in this embodiment, when the aqueous hard resin solution contains an amine compound having the general formula (I), in which:

$R^1$ and $R^2$ are independently from each other is a linear or branched $C_{1-6}$-alkyl group and
$R^3$ is a linear or branched $C_{3-10}$-hydroxyl alkyl group.

Even more preferably, $R^1$ and $R^2$ are each independently from each other a linear $C_{1-4}$-alkyl group, i.e. a methyl group, an ethyl group, a propyl group or a butyl group, still more preferably a methyl group or an ethyl group and most preferably a methyl group.

In accordance with a third particularly preferred embodiment of the present invention, the aqueous hard resin solution contains a primary amine compound with the general formula (I), i.e. an amine compound in which:

$R^1$ and $R^2$ are H and
$R^3$ is a $C_n$-including linear or branched hydroxyl alkyl group, with n being an integer of 3 or more.

Particular good results are obtained in this embodiment, when the aqueous hard resin solution contains an amine compound having the general formula (I), in which:

$R^1$ and $R^2$ are H and
$R^3$ is a linear or branched $C_{3-10}$-hydroxyl alkyl group.

In accordance with a further development of the idea of the present patent application, the aqueous hard resin solution contains a primary, secondary and/or tertiary amine compound having the general formula (I), in which $R^3$ has the general formula (II):

$$-(CR^4R^5)_m-(CR^6(OH))_o-CR^7R^8H_p(OH)_q \qquad (II),$$

wherein

m is an integer of 0 to 2,
o is an integer of 2 to 8,
q is an integer of 0 or 1,
p is an integer of 0 or 1, wherein p is 1, when q is 0, and p is 0, when q is 1,
$R^4$, $R^5$, $R^6$, $R^7$, $R^8$ are independently from each other, H, a linear or branched alkyl group, a linear or branched alkyl group with hydroxyl functionality or a linear or branched alkyl group with amine functionality.

Preferably, $R^4$, $R^5$, $R^6$, $R^7$, $R^8$ are independently from each other, H, a linear or branched $C_{1-10}$-alkyl group, a linear or branched $C_{1-10}$-alkyl group with hydroxyl functionality or a linear or branched $C_{1-10}$-alkyl group with amine functionality.

In case of a primary amine, i.e. an amine having the general formula (I), in which $R^1$ and $R^2$ are H and $R^3$ has the general formula (II) the amine is an amino sugar. Such amino sugars or their derivatives are preferably used in the present invention. Likewise thereto, a secondary or tertiary amine with $R^1$ and $R^2$ having the meaning as mentioned above for formula (I) and with $R^3$ having the general formula (II) is defined in the present invention as amino sugar.

However, even more preferable is that the aqueous hard resin solution contains a secondary or tertiary amine compound having the general formula (I), in which $R^3$ has the general formula (II).

Independently from whether the at least one amine compound is a primary, secondary or tertiary amine compound having the general formula (I), in which $R^3$ has the general formula (II), the $-(CR^4R^5)_m$-part of $R^3$ of the general formula (II) is a spacer, which is preferably short or even absent. In view thereof, m is preferably an integer of 0 or 1 and o is preferably an integer of 2 to 6.

Good results are in particular obtained, when in the general formula (II) m is an integer of 1 and o is an integer of 4.

In accordance with a further particular preferred embodiment of the present invention, the aqueous hard resin solution contains a primary, secondary and/or tertiary amine compound having the general formula (I), in which $R^3$ has the general formula (III):

$$-(CH_2)_m-(CH(OH))_o-CH_2OH \qquad (III),$$

wherein

m is an integer of 0 to 2 and

o is an integer of 2 to 8.

In case of a primary amine, i.e. an amine having the general formula (I), in which $R^1$ and $R^2$ are H and $R^3$ has the general formula (III) the amine is an amino sugar. Such amino sugars are preferably used in the present invention.

However, even more preferable is that the aqueous hard resin solution contains a secondary or tertiary amine compound having the general formula (I), in which $R^3$ has the general formula (III).

Independently from whether the at least one amine compound is a primary, secondary or tertiary amine compound having the general formula (I), in which $R^3$ has the general formula (III), the $-(CH_2)_m$-part of $R^3$ of the general formula (III) is a spacer, which is preferably short or even absent. In view thereof, m is preferably an integer of 0 or 1 and o is preferably an integer of 2 to 6.

Good results are in particular obtained, when in the general formula (III) m is an integer of 1 and o is an integer of 2 to 5 and preferably of 4.

In accordance with a particular preferred variant of this embodiment, the amine compound is N-methylglucamine, i.e. a secondary amine having the general formula (I), in which $R^1$ is H, $R^2$ is $-CH_3$ and $R^3$ is a group having the general formula (III), in which m is an integer of 1, o is an integer of 4.

In accordance with an alternative particular preferred variant of this embodiment, the amine compound is N,N-dimethylglucamine, i.e. a tertiary amine having the general formula (I), in which $R^1$ and $R^2$ are $-CH_3$ and $R^3$ is a group having the general formula (III), in which m is an integer of 1, o is an integer of 4.

It has been found in the present invention that an excellence balance between excellent gloss and nevertheless high blocking resistance is obtained, when the hard resin solution contains a combination of the above described at least one amine compound and ammonia. In tendency, the less ammonia is used the higher the gloss and the more amine is used the poorer the block resistance of the respective overprint varnish containing the hard resin solution.

Good results are obtained with this regard particularly, when the ratio of the amine compound is 0.1 to 99 % by weight. It is even more preferably that the ratio of the amine compound is 1 to 95 % by weight and most preferably 10 to 90 % by weight of the sum of the content of the amine compound and ammonia in the hard resin solution.

In a further development of the idea of the present invention, it is proposed that the total content of the amine compound and of the optional ammonia is 10 to 80% by weight, preferably 20 to 60% by weight and most preferably 20 to 45% by weight based on the total weight of the aqueous hard resin solution.

In principle, the present invention is not limited concerning the kind of hard resin contained in the aqueous hard resin solution. Good results are in particular obtained, when the at least one hard resin is selected from the group consisting of acrylic copolymer, styrene acrylate copolymers, styrene maleic acid copolymers, maleic resins, polyester resins, fumaric resins, shellac and arbitrary combinations of two or more thereof.

Preferably, the hard resin is a (co)polymer with a weight average molecular weight of 800 to 20,000 g/mol, wherein the weight average molecular weight is measured with gel permeation chromatography (GPC). Preferably, the GPC is performed with three GPC columns used together in sequence, namely in particular as column-1: PSS DSV Analytical 50 Å, dimension 8 x 300 mm, particle size: 5 μm, distributed by Polymer Standard Services GmbH; column-2: PSS DSV Analytical 1000 Å, dimension 8 x 300 mm, particle size: 5 μm, distributed by Polymer Standard Services GmbH, and column-3: PSS DSV Analytical 100.000 Å, dimension 8 x 300 mm, particle size: 5 μm, distributed by Polymer Standard Services GmbH. Further preferably, the following settings are used:

Sample preparation: 1% solution of Resin in tetrahydrofuran (THF)

Instrument Settings:

Pump flow: 1 ml/minute,

Injection volume: 100 μl,

Column oven temperature: 30°C,

RI detector temperature: 37°C.

For the GPC, for instance a device from the Agilent 1200-series distributed by Agilent Technologies may be used.

Moreover, it is preferred that the hard resin is a (co)polymer having a glass transition temperature of 20 to 160°C.

Furthermore, it is preferred that the hard resin is a (co)polymer having an acid number of 150 to 500 mg KOH/g.

In general, hard resins have a weight average molecular weight between 800 and 20,000 g/mol, a softening or melting point of 100 to 190°C, an OH-number of 0 to 200 mg KOH/g, an acid number of 100 to 500 mg KOH/g and a glass transition temperature from 40 to 170°C. Suitable hard resins are e.g. supplied by BASF, Indulor, Lawter, Hanwa, Shiva, or Polyscope.

More preferably, the aqueous hard resin solution contains at least one hard resin being selected from the group consisting of acrylic copolymers, styrene acrylate copolymers, styrene maleic acid copolymers, maleic resins, shellac and arbitrary combinations of two or more thereof.

Most preferably, the aqueous hard resin solution contains as at least one hard resin a styrene acrylate copolymer.

In accordance with a further preferred embodiment of the present invention, the content of the hard resin is 22 to 50% by weight, more preferably 30 to 45% by weight and even more preferably 33 to 45% by weight based on the total weight of the aqueous hard resin solution.

According to one specific variant of the present invention, the sum of the amine numbers of the ammonia and the amine compound is 80 to 120%, preferably 90 to 110% and more preferably 95 to 105% of the sum of the carboxyl number and the OH-number of the hard resin.

In accordance with an alternative specific variant of the present invention, the sum of the amine numbers of the ammonia and the amine compound exceeds the sum of the carboxyl number of the hard resin by either more than 0 or preferably by at least 20 molar equivalents.

Another aspect of the present invention is a water-based overprint varnish, which contains the above described aqueous hard resin solution.

The water-based overprint varnish contains in addition to the above described aqueous hard resin solution at least one emulsion or dispersion of at least one other polymer. Preferably, the at least one emulsion or dispersion of this polymer is selected from the group consisting of styrene acrylate copolymers, styrene maleic acid acrylic acid copolymers, polystyrene homopolymers, vinylacetate polymers, vinylacetate ethylene copolymers, polyurethanes, polyurethane acrylate copolymers, vinylacetate acrylic acid copolymers, sulfopolyesters, lignin derivatives, cellulose derivatives, starch or its derivatives, chitin or its derivatives, casein or its derivatives, gelatin or its derivatives, polylactides, polyhydroxybutyrates and arbitrary combinations of two or more of the aforementioned polymers.

Preferably, the polymer emulsion or dispersion has a solid content of 20 to 60% by weight.

Moreover, it is preferred that the polymer in the emulsion or dispersion has a weight average molecular weight measured as set out above with GPC of more than 20,000 to 1,000,000 g/mol.

Moreover, it is preferred that the polymer in the emulsion or dispersion has a glass transition temperature of -50 to 150°C.

In addition, it is preferred that the polymer in the emulsion or dispersion has an acid number of 30 to 250 mg KOH/g.

The polymer emulsion or dispersion may also contain one or more neutralizing agents like ammonia, sodium hydroxide, potassium hydroxide, triethanol amine, diethanol amine, monethanol amine or the like, as well as preserving agents.

Suitable polymer emulsions or dispersion are e.g. supplied by BASF, Dow, Cela-nese, Indulor, Shiva, EOC or Allnex.

Good results are in particular obtained, when the polymer solution or dispersion comprises as polymer a styrene acrylate copolymer.

In accordance with a particular preferred embodiment of the present invention, the water-based overprint varnish comprises:

a) 10 to 30% by weight and preferably 14 to 25% by weight of hard resin,
b) 1 to 30% by weight and preferably 2 to 15% by weight of the amine compound,
c) 0.1 to 10% by weight and preferably 1 to 5% by weight of ammonia and
d) 1 to 40% by weight and preferably 2 to 25% by weight of the polymer in the polymer emulsion or dispersion.

In addition, the water-based overprint varnish may comprise up to 10% by weight of one or more additives, such as one or more defoamers, wetting agents (such as dioctyl sulfosuccinate, sodium salt), preservatives, waxes, fillers, organic solvents (such as a glycol) to support film-formation and the like.

Subsequently, the present invention is described by means of illustrating, but not limiting examples.

**Examples**

The following commercial products were used as raw materials:

Joncryl 682: Acrylic resin distritbuted by BASF SE, Ludwigshafen, Germany.

Xiran 1000: Styrene maleic acid copolymer distritbuted by Polyscope Polymers BV, Geleen, The Netherlands

Erkamar 3269: Maleic resin distritbuted by Robert Kraemer GmbH, Rastede, Germany

Induprint SE 91: Acrylic dispersion distritbuted by Indulor Chemie GmbH, Ankum, Germany

Ultralube MD-2100: Wax distritbuted by keim additec surface GmbH, Kirchberg (Hunsrueck), Germany

Tego Foamex 1488: Defoamer distritbuted by Evonik Tego Chemie GmbH, Essen, Germany

Byk 019 : Defoamer distritbuted by Byk Additives & Instruments GmbH, Wesel, Germany

First, as *"part 1"* a hard resin solution was prepared. In *"part 1",* the components mentioned in the below tables for *"part 1"* were mixed as follows: Water was poured in a beaker, then during continuous stirring resin was added, then amine was added and the reaction mixture heated to 70 to 80°C. The reaction mixture was stirred for about one to three hours until a clear solution was obtained. The solution was allowed to cool down to room temperature. Then, all compounds mentioned in the below tables for *"part 2"* were added and the mixture stirred for another five minutes so as to obtain a water-based overprint varnish. Finally, water has been added to the water-based overprint varnish so as to adjust the viscosity thereof for the printing to a final draining viscosity of 40 to 55 s in a Din 4 Cup.

The amine numbers of ammonia and the respective amines have been calculated using the following equation:

$$1000 \times 56.1/\text{molecular weight of material} = \text{Amine Number (mg KOH/g)}$$

| Amine | Molecular weight [g/mol] | Amine number [mg KOH/g] |
|---|---|---|
| Ammonia, 25% in water | | |
| DEA | 105.14 | 533.57 |
| MDEA | 119.16 | 470.80 |
| TEA | 149.188 | 376.06 |
| MG | 209.24 | 267.11 |

Acid numbers are a measure for the content of COOH groups in organic materials, e.g. polymers or resins. The following table shows the numbers for the investigated binders:

| Hard resin | Acid number [mg KOH/g] |
|---|---|
| Joncryl 682 | 230-245 |
| Xiran 1000 P | 475 |
| Erkamar 3269 | 190-210 |

In *"part 1"* of the recipes the amount of amine/ammonia to hard resin was calculated to be slightly above a 1:1 equivalent ratio of combined amine values and acid numbers.

**Table 1**

| Joncryl 682 | Comparative Example 1 | Comparative Example 2 | Comparative Example 3 | Comparative Example 4 | Comparative Example 5 | Comparative Example 6 | Example 1 | Example 2 | Example 3 | Comparative Example 7 |
|---|---|---|---|---|---|---|---|---|---|---|
| *Part 1* | | | | | | | | | | |
| Water | 16.75 | 18.36 | 19.17 | 10.23 | 15.10 | 17.54 | 0.12 | 10.05 | 15.01 | 19.97 |
| Joncryl 682 | 21.72 | 21.97 | 22.09 | 21.72 | 21.97 | 22.09 | 16.91 | 19.57 | 20.89 | 22.22 |
| ammonia 25% solution in water | | 3.08 | 4.62 | 0.00 | 3.08 | 4.62 | 0.00 | 3.08 | 4.62 | 6.16 |
| Diethanolamine (DEA) 100% | 9.89 | 4.95 | 2.47 | | | | | | | |
| Triethanolamine (TEA) 85% | | | | 16.41 | 8.20 | 4.10 | | | | |
| | | | | | | | | | | |
| *Part 2* | | | | | | | | | | |
| Induprint SE 91 | 42.87 | 42.87 | 42.87 | 42.87 | 42.87 | 42.87 | 42.87 | 42.87 | 42.87 | 42.87 |
| Ultralube MD-2100 | 3.22 | 3.22 | 3.22 | 3.22 | 3.22 | 3.22 | 3.22 | 3.22 | 3.22 | 3.22 |
| Dioctylsulfosuccinate, 70% in water | 5.36 | 5.36 | 5.36 | 5.36 | 5.36 | 5.36 | 5.36 | 5.36 | 5.36 | 5.36 |
| Tego Foamex 1488 | 0.20 | 0.20 | 0.20 | 0.20 | 0.20 | 0.20 | 0.20 | 0.20 | 0.20 | 0.20 |
| **Sum** | **100.00** | **100.00** | **100.00** | **100.00** | **100.00** | **100.00** | **100.00** | **100.00** | **100.00** | **100.00** |
| added water to adjust print viscosity | 20.54 | 18.31 | 18.13 | 21.44 | 20.54 | 18.76 | 13.13 | 13.49 | 15.36 | 18.49 |
| **draining time Din 4 Cup** | **52** | **55** | **55** | **55** | **44** | **46** | **54** | **55** | **55** | **46** |

EP 3 875 553 A1

**Table 2**

| | Comparative Example 8 | Comparative Example 9 | Comparative Example 10 | Comparative Example 11 | Comparative Example 12 | Comparative Example 13 | Example 4 | Example 5 | Example 6 | Comparative Example 14 |
|---|---|---|---|---|---|---|---|---|---|---|
| *Part 1* | | | | | | | | | | |
| Water | 29.14 | 23.66 | 20.92 | 21.53 | 18.17 | 18.17 | 0.12 | 9.15 | 13.66 | 18.18 |
| XIRAN 1000 | 10.11 | 14.71 | 17.01 | 13.29 | 15.69 | 17.50 | 10.52 | 14.92 | 17.11 | 19.31 |
| ammonia 25% solution in water | | 5.43 | 8.15 | | 5.43 | 8.15 | | 5.43 | 8.15 | 10.86 |
| Diethanolamine (DEA) 100% | 9.10 | 4.55 | 2.28 | | | | | | | |
| Triethanolamine (TEA) 85% | | | | 13.53 | 9.06 | 4.53 | | | | |
| Methylmeglumin (MG) 50% | | | | | | | 37.71 | 18.86 | 9.43 | |
| *Part 2* | | | | | | | | | | |
| Induprint SE 91 | 42.87 | 42.87 | 42.87 | 42.87 | 42.87 | 42.87 | 42.87 | 42.87 | 42.87 | 42.87 |
| Ultralube MD-2100 | 3.22 | 3.22 | 3.22 | 3.22 | 3.22 | 3.22 | 3.22 | 3.22 | 3.22 | 3.22 |
| Dioctylsulfosuccinate. 70% in water | 5.36 | 5.36 | 5.36 | 5.36 | 5.36 | 5.36 | 5.36 | 5.36 | 5.36 | 5.36 |
| Defoamer Byk 019 | 0.20 | 0.20 | 0.20 | 0.20 | 0.20 | 0.20 | 0.20 | 0.20 | 0.20 | 0.20 |
| Sum | 100.00 | 100.00 | 100.00 | 100.00 | 100.00 | 100.00 | 100.00 | 100.00 | 100.00 | 100.00 |
| added water for adjusting print viscosity | 7.15 | 10.72 | 12.50 | 16.08 | 16.08 | 15.18 | 14.29 | 10.72 | 13.40 | 17.86 |
| draining time Din 4 Cup | 50 | 53 | 52 | 50 | 46 | 51 | 38 | 53 | 49 | 54 |

Table 3

| | Comparative Example 15 | Comparative Example 16 | Comparative Example 17 | Comparative Example 18 | Comparative Example 19 | Comparative Example 20 | Example 7 | Example 8 | Example 9 | Comparative Example 21 |
|---|---|---|---|---|---|---|---|---|---|---|
| *Part 1* | | | | | | | | | | |
| Water | 24.91 | 25.63 | 25.98 | 22.74 | 24.52 | 25.44 | 13.96 | 20.15 | 23.24 | 26.34 |
| Erkamar 3269 | 16.91 | 17.29 | 17.48 | 15.71 | 16.69 | 17.18 | 13.68 | 15.68 | 16.67 | 17.67 |
| ammonia 25% solution in water | | 2.17 | 3.26 | | 2.17 | 3.26 | | 2.17 | 3.26 | 4.35 |
| Diethanolamine (DEA) 100% | 6.52 | 3.26 | 1.63 | | | | | | | |
| Triethanolamine (TEA) 85% | | | | 9.91 | 4.95 | 2.48 | | | | |
| Methylmeglu min (MG) 50% | | | | | | | 20.72 | 10.36 | 5.18 | |
| *Part 2* | | | | | | | | | | |
| Induprint SE 91 | 42.87 | 42.87 | 42.87 | 42.87 | 42.87 | 42.87 | 42.87 | 42.87 | 42.87 | 42.87 |
| Ultralube MD-2100 | 3.22 | 3.22 | 3.22 | 3.22 | 3.22 | 3.22 | 3.22 | 3.22 | 3.22 | 3.22 |
| Dioctylsulfosuccinate, 70% in water | 5.36 | 5.36 | 5.36 | 5.36 | 5.36 | 5.36 | 5.36 | 5.36 | 5.36 | 5.36 |
| Tego Foamex 1488 | 0.20 | 0.20 | 0.20 | 0.20 | 0.20 | 0.20 | 0.20 | 0.20 | 0.20 | 0.20 |
| **Sum** | **100.00** | **100.00** | **100.00** | **100.00** | **99.98** | **100.00** | **100.00** | **100.00** | **100.00** | **100.00** |
| added water for adjusting print viscosity | 14.29 | 16.97 | 19.65 | 8.04 | 13.40 | 16.08 | 4.47 | 9.82 | 17.86 | 5.36 |
| **draining time Din 4 Cup** | **50** | **53** | **46** | **49** | **47** | **53** | **49** | **53** | **43** | **46** |

The water-based overprint varnishes of all examples and comparative examples were evaluated concerning their gloss and blocking resistance as follows:

Application of the overprint varnishes:

The overprint varnishes were applied with a K control coater 623 and a 6$\mu$m K bar, both from Erichsen GmbH & Co. KG, Herner, Germany, on Invercote T from Iggesund Paperboard, Iggesund, Sweden, 220g/m$^2$.

Gloss measurement:

The gloss was measured after the varnish had been coated on Invercote T as substrate with a micro tri-gloss instrument from Byk Gardner GmbH, Geretsried, Germany. The coated substrates were allowed to dry for 24 hours in a climate controlled room at 21-23°C and 55-65% humidity, before the gloss was measured. The gloss was measured at two different viewing angles, namely at 20° and at 60°. An average of five measurement results was calculated, respectively.

The higher the value of the gloss units, the more glossy the surface.

Blocking resistance:

Wet blocking was tested with a Prüfbau blocking test device from pruefbau Dr.-Ing. H. Duerner GmbH, Peissenberg, Germany, to identify the blocking behavior in a humid or even wet environment. The substrates coated as described above were allowed to dry for 24 hours in a climate controlled room at 21-23°C and 55-65% humidity, before wet blocking behavior was measured. 10 small round samples of 2cm$^2$ were cut out with a cutting device. Five samples were placed printed side up into the block testing device. The coated sample was covered with another coated sample, whereas the coating was facing the coated side. The sample "sandwich" in the block testing device was pressed between two precision plates for three hours at 50°C. At the five measuring points different pressures were applied: 0,25kg/cm$^2$, 0,5kg/cm$^2$, 1,0kg/cm$^2$, 2,0 kg/cm$^2$, 5,0 kg/cm$^2$. After three hours the samples were removed from the block testing device and the coated test samples were separated. Samples did block together or not. An average of two measurement results at each pressure was calculated, respectively.

The following scale for the determined blocking resistance was used:

3: no adherence
2: slight adherence
1: slight destruction of the printed surface
0: extended destruction of the printed surface

The obtained results are summarized in Tables 4 to 6.

**Table 4**

| 6μm on Invercote T, formulations with Joncryl 682 | Comparative Example 1 | Comparative Example 2 | Comparative Example 3 | Comparative Example 4 | Comparative Example 5 | Comparative Example 6 | Example 1 | Example 2 | Example 3 | Comparative Example 7 |
|---|---|---|---|---|---|---|---|---|---|---|
| Gloss 20° average of 2 samples | 39 | 29 | 26 | 57 | 31 | 28 | 36 | 30 | 27 | 24 |
| Gloss 60° average of 2 samples | 85 | 78 | 76 | 94 | 80 | 78 | 83 | 80 | 77 | 74 |
| Blocktest Invercote T / 25 kP (0,25kg/cm²) | 1,5 | 3 | 3 | 1 | 2 | 3 | 2 | 3 | 3 | 3 |
| Blocktest Invercote T / 50 kP (0,5kg/cm²) | 0,5 | 2 | 2 | 0 | 1 | 3 | 1 | 3 | 3 | 3 |
| Blocktest Invercote T /100 kP (1,0kg/cm²) | 0 | 1,5 | 2 | 0 | 1 | 2,5 | 0 | 3 | 3 | 3 |
| Blocktest Invercote T /200 kP (2,0kg/cm²) | 0 | 1 | 2 | 0 | 0 | 2 | 0 | 3 | 3 | 3 |
| Blocktest Invercote T /500 kP (5,0kg/cm²) | 0 | 0,5 | 2 | 0 | 0 | 2 | 0 | 2 | 3 | 3 |
| **Blocktest average** | 0,4 | 1,6 | 2,2 | 0,2 | 0,8 | 2,5 | 0,6 | 2,8 | 3 | 3 |

Table 5

| 6μm on Inver-cote T, formulations with Xiran 1000P | Comparative Example 8 | Comparative Example 9 | Comparative Example 10 | Comparative Example 11 | Comparative Example 12 | Comparative Example 13 | Example 4 | Example 5 | Example 6 | Comparative Example 14 |
|---|---|---|---|---|---|---|---|---|---|---|
| Gloss 20° average of 2 samples | 22,5 | 22,7 | 20,55 | 32,1 | 25,45 | 23,95 | 29,55 | 26,25 | 23,8 | 19,35 |
| Gloss 60° average of 2 samples | 72,5 | 72,65 | 69,85 | 80,65 | 75,6 | 73,9 | 79,1 | 76 | 73,55 | 67,4 |
| Block test Invercote T / 25 kP (0,25kg/cm$^2$) | 3 | 3 | 3 | 2 | 3 | 3 | 3 | 3 | 3 | 3 |
| Block test Invercote T / 50 kP (0,5kg/cm$^2$) | 3 | 3 | 3 | 1 | 3 | 3 | 3 | 3 | 3 | 3 |
| Block test Invercote T / 100 kP (1,0kg/cm$^2$) | 3 | 3 | 3 | 0 | 3 | 3 | 3 | 3 | 3 | 3 |
| Block test Invercote T / 200 kP (2,0kg/cm$^2$) | 2,5 | 3 | 3 | 0 | 3 | 3 | 2,5 | 3 | 3 | 3 |
| Block test Invercote T / 500 kP (5,0kg/cm$^2$) | 2,5 | 3 | 3 | 0 | 3 | 3 | 2,5 | 3 | 3 | 3 |
| **Blocktest average** | 2,8 | 3 | 3 | 0,6 | 3 | 3 | 2,8 | 3 | 3 | 3 |

**Table 6**

| 6μm on Invercote T, formulations with Erkamar 3269 | Comparative Example 15 | Comparative Example 16 | Comparative Example 17 | Comparative Example 18 | Comparative Example 19 | Comparative Example 20 | Example 7 | Example 8 | Example 9 | Comparative Example 21 |
|---|---|---|---|---|---|---|---|---|---|---|
| Gloss 20° average of 2 samples | 24 | 21 | 19 | 30 | 23 | 20 | 29 | 23 | 18 | 19 |
| Gloss 60° average of 2 samples | 73 | 70 | 67 | 78 | 73 | 69 | 78 | 72 | 66 | 67 |
| Block test Invercote T / 25 kP (0,25kg/cm²) | 2 | 3 | 3 | 2 | 3 | 3 | 3 | 3 | 3 | 3 |
| Block test Invercote T / 50 kP (0,5kg/cm²) | 2 | 3 | 3 | 1 | 3 | 3 | 3 | 3 | 3 | 3 |
| Block test Invercote T / 100 kP (1,0kg/cm²) | 1 | 2 | 3 | 0 | 3 | 3 | 3 | 3 | 3 | 3 |
| Block test Invercote T / 200 kP (2,0kg/cm²) | 1 | 2 | 3 | 0 | 3 | 3 | 2 | 3 | 3 | 3 |
| Block test Invercote T / 500 kP (5,0kg/cm²) | 0 | 1 | 3 | 0 | 3 | 3 | 2 | 3 | 3 | 3 |
| **Blocktest average** | 1,2 | 2,2 | 3 | 0,6 | 3 | 3 | 2,6 | 3 | 3 | 3 |

**EP 3 875 553 A1**

The results show that the water-based overprint varnishes of the examples containing an amine compound in accordance with the present invention had an excellent gloss of at least 70 at a viewing angle of 60°. The water-based overprint varnishes of the examples had an improved blocking resistance in comparison to the water-based overprint varnish of the comparative examples including diethanol amine or triethanol amine and an improved gloss in comparison to the water-based overprint varnish of the comparative examples including only ammonia. An especially good combination of gloss and blocking resistance was obtained in examples 2, 5 and 8, in which the water-based overprint varnishes included a mixture of an amine compound in accordance with the present invention and ammonia.

## Claims

1. An aqueous hard resin solution for the use in a water-based overprint varnish, wherein the aqueous hard resin solution contains water, at least one hard resin and at least one amine compound, wherein at least one of the at least one amine compound has at least two hydroxyl groups and at least one $C_n$-including group, with n being an integer of 3 or more.

2. The aqueous hard resin solution according to claim 1, wherein the amine compound has the general formula (I):

$$NR^1R^2R^3 \qquad (I),$$

wherein

$R^1$ and $R^2$ are independently from each other H, a linear or branched alkyl group, a cycloalkyl group, an alkyl ether group, an hydroxyl functional alkyl ether group, an alkyl thioether group, an amide group, an amino-functional alkyl group, an amino-functional alkylether group, an aryl group or a linear or branched hydroxyl alkyl group and
$R^3$ is a linear or branched alkyl group, a cycloalkyl group, an alkyl ether group, an alkyl thioether group, an amide group, an aryl group or a linear or branched hydroxyl alkyl group,
with the provision that the residues $R^1$, $R^2$ and $R^3$ comprise in total two or more hydroxyl groups and that at least one of residues $R^1$, $R^2$ and $R^3$ is a $C_n$-including group, with n being an integer of 3 or more.

3. The aqueous hard resin solution according to claim 2, wherein
$R^1$ and $R^2$ are independently from each other H, a linear or branched $C_{1-10}$-alkyl group, a $C_{6-12}$-cycloalkyl group, a $C_{1-10}$-alkyl ether group, a $C_{6-12}$-aryl group or a linear or branched $C_{1-10}$-hydroxyl alkyl group, a linear or branched $C_{1-10}$-hydroxyl alkyl ether group and
$R^3$ is a linear or branched $C_{1-10}$-alkyl group, a $C_{6-12}$-cycloalkyl group, a $C_{1-10}$-alkyl ether group, a $C_{6-12}$-aryl group or a linear or branched $C_{3-10}$-hydroxyl alkyl group.

4. The aqueous hard resin solution according to claim 2 or 3, wherein $R^1$ is H and $R^2$ is a linear or branched $C_{1-6}$-alkyl group, or, wherein $R^1$ and $R^2$ are a linear or branched $C_{1-6}$-alkyl group.

5. The aqueous hard resin solution according to any of claims 2 to 4, wherein $R^3$ has the general formula (II):

$$-(CR^4R^5)_m-(CR^6(OH))_o-CR^7R^8H_p(OH)_q \qquad (II),$$

wherein

m is an integer of 0 to 2,
o is an integer of 2 to 8,
q is an integer of 0 or 1,
p is an integer of 0 or 1, wherein p is 1, when q is 0, and p is 0, when q is 1, $R^4$, $R^5$, $R^6$, $R^7$, $R^8$ are independently from each other, H, a linear or branched alkyl group, a linear or branched alkyl group with hydroxyl functionality or a linear or branched alkyl group with amine functionality.

6. The aqueous hard resin solution according to any of claims 2 to 5, wherein $R^3$ has the general formula (III):

$$-(CH_2)_m-(CH(OH))_o-CH_2OH \qquad (II),$$

16

wherein

m is an integer of 0 to 2 and
o is an integer of 2 to 8.

7.  The aqueous hard resin solution according to claim 5 or 6, wherein m is an integer of 0 or 1 and o is an integer of 2 to 6.

8.  The aqueous hard resin solution according to any of claims 5 to 7, wherein m is an integer of 1, o is an integer of 2 to 5 and preferably of 4, $R^1$ is H and $R^2$ is -$CH_3$, or, wherein m is an integer of 1, o is an integer of 2 to 5 and preferably of 4, $R^1$ is -$CH_3$ and $R^2$ is -$CH_3$.

9.  The aqueous hard resin solution according to any of the preceding claims, wherein the aqueous hard resin solution additionally contains ammonia.

10. The aqueous hard resin solution according to claim 9, wherein the ratio of the amine compound is 0.1 to 99% by weight, preferably 1 to 95% by weight and more preferably 10 to 90% by weight of the sum of the content of the amine compound and ammonia in the hard resin solution.

11. The aqueous hard resin solution according to any of the preceding claims, wherein the at least one hard resin is selected from the group consisting of styrene acrylate copolymers, styrene maleic acid copolymers, maleic resins, polyester resins, fumaric resins, shellac and arbitrary combinations of two or more thereof.

12. The aqueous hard resin solution according to any of the preceding claims, wherein the content of the hard resin is 22 to 45% by weight, preferably 30 to 43% by weight and more preferably 33 to 43% by weight based on the total weight of the aqueous hard resin solution, and/or, wherein the sum of the amine numbers of the ammonia and the amine compound is 80 to 120%, preferably 90 to 110% and more preferably 95 to 105% of the sum of the carboxyl number and the OH-number of the hard resin.

13. A water-based overprint varnish containing the aqueous hard resin solution according to any of the preceding claims.

14. The water-based overprint varnish according to claim 13, which further comprises at least one additional polymer solution or dispersion, which is an emulsion or a dispersion of a another polymer being selected from the group consisting of styrene acrylate copolymers, styrene maleic acid acrylic acid copolymers, polystyrene homopolymers, vinylacetate polymers, vinylacetate ethylene copolymers, polyurethanes, polyurethane acrylate copolymers, vinylacetate acrylic acid copolymers, sulfopolyesters, lignin derivatives, cellulose derivatives, starch, chitin, casein, gelatin, polylactides, polyhydroxybutyrates and arbitrary combinations of two or more of the aforementioned polymers, wherein the polymer solution or dispersion preferably comprises as polymer a styrene acrylate copolymer.

15. The water-based overprint varnish according to claim 13 or 14, which comprises:

a) 10 to 30% by weight and preferably 14 to 25% by weight of hard resin,
b) 1 to 30% by weight and preferably 2 to 15% by weight of the amine compound,
c) 0.1 to 10% by weight and preferably 1 to 5% by weight of ammonia and
d) 1 to 40% by weight and preferably 2 to 25% by weight of polymer in the polymer emulsion or dispersion.

Europäisches
Patentamt

European
Patent Office

Office européen
des brevets

# EUROPEAN SEARCH REPORT

**Application Number**

EP 20 16 0752

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 340 802 A1 (AIR PROD & CHEM [US]) 3 September 2003 (2003-09-03) * claims; examples * ----- | 1-15 | INV. C09D11/03 C09D11/10 |
| X | EP 1 277 829 A2 (AIR PROD & CHEM [US]) 22 January 2003 (2003-01-22) * claims; examples * ----- | 1-15 | |
| X | WO 2016/111718 A1 (RHODIA OPERATIONS SAS) 14 July 2016 (2016-07-14) * claims; examples * ----- | 1-15 | |
| X | EP 1 457 481 A1 (AIR PROD & CHEM [US]) 15 September 2004 (2004-09-15) * claims; examples * ----- | 1-15 | |
| X | EP 1 705 172 A1 (GOLDSCHMIDT GMBH [DE]) 27 September 2006 (2006-09-27) * claims; examples * ----- | 1-15 | |
| A | WO 2017/062228 A1 (SUN CHEMICAL CORP [US]) 13 April 2017 (2017-04-13) * claims; examples * ----- | 1-15 | TECHNICAL FIELDS SEARCHED (IPC) C09D |

The present search report has been drawn up for all claims

| Place of search | Date of completion of the search | Examiner |
|---|---|---|
| Munich | 5 August 2020 | Schmitz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 16 0752

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2020

| Patent document cited in search report | | Publication date | Patent family member(s) | | Publication date |
|---|---|---|---|---|---|
| EP 1340802 | A1 | 03-09-2003 | AT | 307864 T | 15-11-2005 |
| | | | BR | 0300254 A | 09-09-2003 |
| | | | CN | 1435454 A | 13-08-2003 |
| | | | DE | 60301981 T2 | 27-04-2006 |
| | | | EP | 1340802 A1 | 03-09-2003 |
| | | | ES | 2247434 T3 | 01-03-2006 |
| | | | JP | 2003305306 A | 28-10-2003 |
| | | | KR | 20030066353 A | 09-08-2003 |
| | | | MX | PA03000922 A | 08-08-2003 |
| | | | US | 2003153631 A1 | 14-08-2003 |
| EP 1277829 | A2 | 22-01-2003 | AT | 307182 T | 15-11-2005 |
| | | | BR | 0202690 A | 13-05-2003 |
| | | | CN | 1398657 A | 26-02-2003 |
| | | | DE | 60206703 T2 | 20-07-2006 |
| | | | EP | 1277829 A2 | 22-01-2003 |
| | | | ES | 2247231 T3 | 01-03-2006 |
| | | | JP | 2003080006 A | 18-03-2003 |
| | | | KR | 20030009225 A | 29-01-2003 |
| | | | MX | PA02006942 A | 29-01-2003 |
| | | | US | 2003087969 A1 | 08-05-2003 |
| WO 2016111718 | A1 | 14-07-2016 | CN | 107207739 A | 26-09-2017 |
| | | | EP | 3242907 A1 | 15-11-2017 |
| | | | US | 2017355806 A1 | 14-12-2017 |
| | | | WO | 2016111718 A1 | 14-07-2016 |
| EP 1457481 | A1 | 15-09-2004 | AT | 362911 T | 15-06-2007 |
| | | | CN | 1535952 A | 13-10-2004 |
| | | | DE | 602004006552 T2 | 17-01-2008 |
| | | | EP | 1457481 A1 | 15-09-2004 |
| | | | ES | 2286524 T3 | 01-12-2007 |
| | | | JP | 4081031 B2 | 23-04-2008 |
| | | | JP | 2004277424 A | 07-10-2004 |
| | | | US | 2004180970 A1 | 16-09-2004 |
| EP 1705172 | A1 | 27-09-2006 | CA | 2535392 A1 | 24-09-2006 |
| | | | DK | 1705172 T3 | 19-03-2007 |
| | | | EP | 1705172 A1 | 27-09-2006 |
| | | | US | 2006217284 A1 | 28-09-2006 |
| WO 2017062228 | A1 | 13-04-2017 | EP | 3334788 A1 | 20-06-2018 |
| | | | US | 2018282569 A1 | 04-10-2018 |
| | | | WO | 2017062228 A1 | 13-04-2017 |

EPO FORM P0459

For more details about this annex : see Official Journal of the European Patent Office, No. 12/82